# EUROPÄISCHE PATENTSCHRIFT

(11) **EP 3 384 758 B1**
(45) Veröffentlichungstag und Bekanntmachung des Hinweises auf die Patenterteilung: **25.03.2020**
(21) Anmeldenummer: 18152670.8
(22) Anmeldetag: 22.01.2018
(51) Int. Cl.: A01F 12/18, A01D 41/12

(54) **ERNTEMASCHINE SOWIE VERFAHREN ZU DEREN BETRIEB**
HARVESTER SYSTEM AND METHOD FOR OPERATING THE SAME
MACHINE DE RÉCOLTE ET SON PROCÉDÉ DE FONCTIONNEMENT

(30) Priorität: 05.04.2017 DE 102017107288
(43) Veröffentlichungstag der Anmeldung: 10.10.2018
(73) Patentinhaber: CLAAS Selbstfahrende Erntemaschinen GmbH, 33428 Harsewinkel (DE)
(72) Erfinder: Speckamp, Dirk, 59073 Hamm (DE); Baumgarten, Joachim, 48361 Beelen (DE); Holtmann, Bernd, 48324 Sendenhorst (DE); Esken, Dirk, 59494 Soest-Meckingsen (DE)
(74) Vertreter: CLAAS Gruppe

(56) Entgegenhaltungen:
- EP-B1- 1 698 222
- DE-B- 1 098 273
- DE-B- 1 192 441
- GB-A- 805 965

## Beschreibung

Die vorliegende Anmeldung betrifft eine Erntemaschine, insbesondere einen selbstfahrenden Mähdrescher zum Ernten von Getreide, umfassend:
- mindestens ein Schneidwerk zum Schneiden mittels der Erntemaschine zu erntender Pflanzen,
- mindestens ein Förderorgan zur Förderung der geschnittenen Pflanzen,
- mindestens ein langgestrecktes, um eine Rotationsachse drehantreibbares Dreschorgan, mittels dessen derart Früchte von den geschnittenen Pflanzen ablösbar sind, dass die Früchte sodann losgelöst von Pflanzenresten der geschnittenen Pflanzen vorliegen,
- mindestens eine langgestreckte, um eine Rotationsachse drehantreibbare Wendetrommel, sowie
- mindestens eine Trenneinrichtung zur Trennung abgelöster Früchte von Pflanzenresten,
wobei mittels des Förderorgans die geschnittenen Pflanzen zu dem Dreschorgan förderbar sind, wobei mittels der Wendetrommel ein von dem Dreschorgan ausgehender, sowohl lose Früchte als auch Pflanzenreste enthaltender Gutstrom an die nachgeschaltete Trenneinrichtung übergebbar ist, wobei mittels der Wendetrommel zumindest eine Hauptströmungsrichtung des Gutstroms veränderbar ist, wobei die Wendetrommel eine Mehrzahl langgestreckter, sich zwischen gegenüberliegenden Stirnseiten der Wendetrommel erstreckender Radialleisten aufweist, die sich jeweils von der Rotationsachse der Wendetrommel betrachtet radial nach außen erstrecken.

Weiterhin betrifft die vorliegende Anmeldung ein Verfahren zum Betrieb einer Erntemaschine, insbesondere eines selbstfahrenden Mähdreschers zum Ernten von Getreide, umfassend die folgenden Verfahrensschritte:
a) Mittels der Erntemaschine zu erntende Pflanzen werden mittels eines Schneidwerks geschnitten.
b) Mittels eines Förderorgans werden die geschnittenen Pflanzen ausgehend von dem Schneidwerk in Richtung eines Dreschorgans gefördert.
c) Mittels des Dreschorgans werden derart Früchte von den geschnittenen Pflanzen gelöst, dass anschließend die Früchte unverbunden mit Pflanzenresten der geschnittenen Pflanzen vorliegen.
d) Mittels einer Wendetrommel wird ein von dem Dreschorgan ausgehender, sowohl Pflanzenreste als auch lose Früchte enthaltender Gutstrom an eine Trenneinrichtung übergeben, wobei im Zuge der Übergabe zumindest eine Hauptströmungsrichtung des Gutstroms verändert wird.
e) Mittels der Trenneinrichtung werden die losen Früchte von den Pflanzenresten getrennt.

Bei dem "Dreschorgan" handelt es sich in aller Regel um eine sogenannte Dreschtrommel, deren Rotationsachse quer zu einer Längsachse der Erntemaschine sowie horizontal orientiert ist. Mit dem Dreschorgan wirkt in aller Regel ein Begrenzungselement, typischerweise in Form eines Dreschkorbs, zusammen. Dieses Begrenzungselement ist typischerweise an einer Unterseite des Dreschorgans angeordnet und wirkt über einen Teilumfangsbereich des Dreschorgans mit letzterem zusammen. Das Dreschorgan und das Begrenzungselement begrenzen gemeinsam einen Bearbeitungsraum, in dem die geernteten Pflanzen gedroschen werden. Hierbei besteht die Möglichkeit, von den Pflanzen gelöste Früchte unmittelbar durch das Begrenzungselement hindurch zu leiten und auf diese Weise von Pflanzenresten abzutrennen. Das Dreschorgan weist in aller Regel einen Durchmesser im Bereich zwischen 50 cm und 150 cm auf, wobei eine Länge eine typischen Dreschorgans in aller Regel im Bereich von 1 m bis 2 m liegt.

Unter einer "Wendetrommel" wird im Sinne der vorliegenden Anmeldung das Bauteil verstanden, dass innerhalb der Erntemaschine dafür zuständig ist, den von dem Dreschorgan übergebenen Gutstrom in Richtung der Trenneinrichtung umzulenken. Hierbei ist es nicht zwingend, dass der Gutstrom unmittelbar von dem Dreschorgan an die Wendetrommel übergeben wird. Stattdessen ist ebenso eine mittelbare Übergabe denkbar, die beispielswiese unter Zwischenschaltung eines weiteren Organs stattfindet.

Das mittels der Wendetrommel bewirkte "Umlenken des Gutstroms" bezieht sich auf dessen Hauptströmungsrichtung. Unter dieser wird im Sinne der vorliegenden Anmeldung diejenige Richtung des Gutstroms verstanden, in die sich letzterer vor Zusammentreffen mit der Wendetrommel primär bewegt. Dabei versteht es sich, dass jeweils einzelne Elemente des Gutstroms sich in zumindest leicht voneinander abweichende Strömungsrichtungen bewegen können. Weiterhin versteht es sich, dass die Wendetrommel typischerweise genauso lang ausgebildet ist wie das Dreschorgan, wobei ein Durchmesser der Wendetrommel in aller Regel den Durchmesser des Dreschorgans unterschreitet. Der Durchmesser einer typischen Wendetrommel kann beispielsweise im Bereich zwischen 20 cm und 50 cm liegen.

Die "Radialleisten" haben den technischen Nutzen, mit dem von dem Dreschorgan übergebenen Gutstrom einzugreifen. Dabei versteht es sich, dass die Wendetrommel ohne derartige Radialleisten nicht dazu in der Lage wäre, den auf die Wendetrommel treffenden Gutstrom aktiv in eine andere Richtung zu befördern. Letzteres gelingt mittels der Radialleisten, die im Zuge der Rotation der Wendetrommel um deren Rotationsachse mit dem zumindest in etwa radial auf die Wendetrommel treffenden Gutstrom kollidieren und diesen hierdurch seitlich in Richtung der Trenneinrichtung abwenden. Die Radialleisten können insbesondere von langgestreckten Blechen gebildet sein, die in aller Regel bezogen auf die Wendetrommel eine radiale Ausdehnung im Bereich zwischen 5 cm und 20 cm aufweisen.

Erntemaschinen sowie Verfahren zu deren Betrieb gemäß der eingangs beschriebenen Art sind im Stand der Technik bereits bekannt. Hierzu wird beispielhaft auf die EP 1 698 222 B1 und die GB 805 965 A verwiesen.

Im Zuge der Verwendung bekannter Erntemaschinen kommt es in aller Regel zu einer erheblichen Staubbelastung im Bereich des vorderen Endes des Förderorgans bzw. im Bereich des Schneidwerks der Erntemaschine. Diese Staubbelastung hat zur Folge, dass eine die Erntemaschine führende Person einen Frontbereich derselben nur unzureichend einsehen kann, da die Staubentwicklung die Sicht erheblich beeinträchtigen kann.

Zur Lösung des Problems der besonders starken Staubbelastung im Bereich des Schneidwerks eines Mähdreschers hat beispielsweise die deutsche Offenlegungsschrift DE 26 41 870 A1 die Anordnung eines Saugebläses vorgeschlagen, das im Bereich des Schneidwerks sowie des Dreschorgans einen Unterdruck erzeugt. Somit wird durch Wirkung des Sauggebläses ein Luftvolumenstrom erzeugt, der ausgehend von dem Schneidwerk in Richtung der Trenneinrichtung gerichtet ist. Auf diese Weise wird effektiv das Austreten von Luft inklusive des damit transportierten Staubs an dem vorderen Ende der Erntemaschine vermieden. Der Nachteil dieser Vorrichtung besteht gleichwohl darin, dass ein zusätzliches Bauteil in Form des Saugebläses erforderlich ist, welches zudem eine beträchtliche Leistung aufbringen muss, um einen ausreichend großen Luftvolumenstrom zu erzeugen.

Der vorliegenden Erfindung liegt mithin die Aufgabe zugrunde, eine Erntemaschine bereitzustellen, bei der ein übermäßiger Austritt von Staub im vorderen Bereich der Erntemaschine unter Einsatz vergleichsweise einfacher Mittel möglich ist.

Die zugrunde liegende Aufgabe wird durch eine Erntemaschine mit den Merkmalen des Anspruchs 1 gelöst.

Unter einer "geöffneten Wendetrommel" wird im Sinne der vorliegenden Anmeldung eine Wendetrommel verstanden, die gewissermaßen einen geöffneten Mantelbereich aufweist. Wendetrommeln gemäß dem Stand der Technik umfassen in aller Regel einen geschlossenen zylindrischen Mantel, von dem ausgehend sich die beschriebenen Radialleisten radial nach außen erstrecken. Bei der erfindungsgemäßen Wendetrommel ist demgegenüber ein Mantel grundsätzlich nicht erforderlich, was dazu führt, dass die geöffnete Wendetrommel nicht grundsätzlich durch Öffnungen in einem Mantel definiert werden kann. Gleichwohl ist eine solche geöffnete Wendetrommel, die einen zumindest abschnittsweise perforierten Mantel aufweist, im Sinne der vorliegenden Erfindung besonders gut vorstellbar und als "geöffnete Wendetrommel" auffassbar. Gleichermaßen ist es ebenso denkbar, dass der "Mantel" der Wendetrommel vollständig aufgelöst ist und gewissermaßen lediglich noch aus Halterungen für die Radialleisten besteht.

Der wesentliche technische Effekt einer geöffneten Wendetrommel besteht dabei im Sinne der vorliegenden Anmeldung darin, dass ein auf die Wendetrommel treffender Luftvolumenstrom - im Gegensatz zum Stand der Technik - nicht gezwungen ist, die Wendetrommel zu umströmen, sondern gewissermaßen in zu der Wendetrommel radiale Richtung in letztere eintreten und sie auf dieselbe Weise auch wieder verlassen kann. Das "Eintreten" des Luftvolumenstroms in die Wendetrommel ist dabei dadurch gekennzeichnet, dass der Luftvolumenstrom in einen Bereich der Wendetrommel eintreten kann, der - im Querschnitt der Wendetrommel betrachtet - näher zu der Rotationsachse der Wendetrommel angeordnet ist als es die Radialleisten sind. Mit anderen Worten befinden sich solche Luftpartikel, die im Sinne der vorliegenden Anmeldung die Wendetrommel durchströmen, zumindest im Zuge der durch Strömung in einem geringeren radialen Abstand von der Rotationsachse der Wendetrommel als jeweils die Radialleisten.

Von der "radialen Durchströmbarkeit" ist insbesondere eine Durchströmbarkeit einer Wendetrommel in axiale Richtung zu unterscheiden, die hier im Sinne der vorliegenden Erfindung für sich alleine betrachtet nicht den notwendigen technischen Effekt erzielen würde, nämlich die Möglichkeit der Ableitung eines im Bereich des Förderorgans vorliegenden Überdrucks durch die Wendetrommel hindurch in Richtung der Trenneinrichtung. Dabei versteht es sich, dass es für die erfindungsgemäße Wendetrommel grundsätzlich unschädlich ist, wenn diese neben einer radialen Durchströmbarkeit auch axial durchströmbar ausgeführt ist.

Die erfindungsgemäße Vorrichtung hat viele Vorteile. Insbesondere ermöglicht sie die Ableitung eines gerichteten Luftvolumenstroms, der ausgehend von einem dem Förderorgan zugewandten Bereich der Wendetrommel in Richtung eines dem Förderorgan abgewandten Bereichs der Wendetrommel strömt. Auf diese Weise wird vermieden, dass es in dem vorderen Bereich der Erntemaschine, das heißt im Bereich sowohl des Förderorgans als auch des Dreschorgans derselben, ein Überdruck entsteht, der letztlich zu dem Austritt eines Luftvolumenstroms im Bereich des Schneidwerks inklusive des von dem Luftvolumenstrom transportierten Staubs führt. Auf diese Weise ermöglicht die erfindungsgemäße Wendetrommel die Förderung eines beträchtlichen Luftvolumenstroms in Richtung der Trenneinrichtung der Erntemaschine, wodurch im Ergebnis die im Stand der Technik zu beklagende Staubbildung fast vollständig vermieden wird.

Ein weiterer Vorteil besteht darin, dass zur Erzeugung des gewünschten technischen Effekts im Vergleich zum Stand der Technik kein zusätzliches Bauteil, beispielsweise ein Sauggebläse oder dergleichen, erforderlich ist. Stattdessen wird die Wendetrommel erfindungsgemäß in einer Doppelfunktion verwendet, nämlich zum einen zum Umlenken des Gutstroms und zum anderen zur Vermeidung eines Überdrucks im Frontbereich der Erntemaschine.

Sofern die Wendetrommel einen dezidierten Mantel aufweist, ist eine solche Ausgestaltung der erfindungsgemäßen Erntemaschine besonders von Vorteil, bei der mindestens 50 %, vorzugsweise mindestens 60 %, weiter vorzugsweise mindestens 70 %, des äußeren Mantels der Wendetrommel geöffnet ausgebildet sind. Die Öffnungen können insbesondere in Form von Perforationen des Mantels vorliegen. Dabei versteht es sich, dass ein möglichst großer gesamter Öffnungsquerschnitt der Wendetrommel deren Durchströmbarkeit grundsätzlich verbessert.

Des Weiteren ist eine solche Ausgestaltung der erfindungsgemäßen Erntemaschine von besonderem Vorteil, die ein langgestrecktes Abscheideorgan umfasst. Dieses Abscheideorgan erstreckt sich parallel zu der Rotationsachse der Wendetrommel und wirkt derart mit der Wendetrommel zusammen, dass ein tangential von den Radialleisten der Wendetrommel im Zuge von deren Rotation um ihre Rotationsachse mitgeschleppter Luftvolumenstrom mittels des Abscheideorgans abscheidbar ist. Hierzu ist das Abscheideorgan in einem geringen Abstand zu einer äußeren Umlauffläche der Radialleisten angeordnet, wobei vorzugsweise besagter Abstand maximal 5 cm, vorzugsweise maximal 3,5 cm, weiter vorzugsweise maximal 2 cm, beträgt. Das Abscheideorgan sollte derart relativ zu der Wendetrommel positioniert sein, dass der Tangentialluftvolumenstrom auf einer dem Förderorgan abgewandten Seite der Wendetrommel abgeschieden wird.

Ein solches Abscheideorgan hat somit die technische Wirkung, einen "Tangentialluftvolumenstrom", den die Radialleisten im Zuge der Rotation der Wendetrommel umwälzen, von der Wendetrommel abzuscheiden. Auf diese Weise wird die Wendetrommel in besonders vorteilhafterweise dazu befähigt, selbst einen gerichteten Luftvolumenstrom zu erzeugen, da infolge der Abscheidung auf einer Seite der Wendetrommel, auf der der Tangentialluftvolumenstrom abgeschieden wird, ein Überdruck und umgekehrt auf der gegenüberliegenden Seite ein Unterdruck erzeugt werden. Mittels Zusammenwirken mit einem Abscheideorgan kann die Wendetrommel folglich als solche eine Sogwirkung erzeugen, mittels derer Luft aus dem vorderen Bereich der Erntemaschine, das heißt dem Bereich des Förderorgans und des Dreschorgans, abgesaugt werden kann. Die Wendetrommel wirkt bei dieser Ausführung demzufolge sowohl zur Umlenkung des Gutstroms als auch in Form eines Sauggebläses. Insbesondere kann mittels einer derartigen Ausgestaltung der Wendetrommel gemeinsam mit einem Abscheideorgan eine Förderleistung von mehr als 1.500 m³/h, vorzugsweise mehr als 1.750 m³/h, weiter vorzugsweise mehr als 2.000 m³/h, erzielt werden.

Bei Verwendung eines Abscheideorgans ist es vorteilhaft, wenn selbiges in einem oberen Bereich der Wendetrommel angeordnet ist. Insbesondere kann das Abscheideorgan in einem oberen Drittel der Wendetrommel angeordnet sein.

Grundsätzlich kann das Abscheideorgan von einem langgestreckten Blech gebildet sein, das bis an die Umlauffläche der Radialleisten heranreicht. Vorteilhafterweise ist das Abscheideorgan gleichwohl so ausgebildet, dass es sich tangential entlang einer Umlauffläche der Radialleisten der Wendetrommel erstreckt, vorzugsweise über einen relativ zu der Rotationsachse der Wendetrommel gemessenen Winkelbereich von mindestens 10°, vorzugsweise mindestens 20°, weiter vorzugsweise mindestens 30°. Hierzu kann das Abscheideorgan insbesondere einen gebogenen Wirkungsabschnitt aufweisen, dessen Durchmesser den Außendurchmesser der Wendetrommel (inklusive der Radialleisten) minimal übersteigt. Ein derartig ausgebildetes Abscheideorgan erzielt eine besonders gute Abscheideleistung.

Unabhängig von dem Vorhandensein eines Abscheideorgans kann eine solche Erntemaschine von besonderem Vorteil sein, die einen von einer Mehrzahl von Mantelleisten gebildeten Mantel aufweist, wobei die genannten Mantelleisten vorzugsweise entlang eines Umfangs betrachtet bzw. in Umfangsrichtung der Wendetrommel äquidistant angeordnet sind. Somit ist es beispielsweise denkbar, dass die Wendetrommel über insgesamt acht Mantelleisten verfügt, die jeweils - bezogen auf die Rotationsachse der Wendetrommel - in einem Winkelabstand von 45° oder 22,5° angeordnet. Bei den Mantelleisten handelt es sich um radial von der Rotationsachse der Wendetrommel beabstandete Leisten, die sich zwischen seitlichen Stirnseiten der Wendetrommel erstrecken. Hierbei ist es grundsätzlich nachrangig, ob die Mantelleisten als solche in sich gerade, gekrümmt oder auf sonstige Weise unregelmäßig geformt sind. Gleichwohl versteht es sich, dass eine gerade Ausbildung der Mantelleisten besonders bevorzugt ist.

In dieser vorteilhaften Ausgestaltung der Wendetrommel verfügt selbige über keinen im Stand der Technik typischen Mantel, der von einer kohärenten Fläche gebildet ist. Stattdessen liegt der mittels der Mantelleisten gebildete Mantel in einer aufgelösten Form vor, wobei gewissermaßen die einzelnen Mantelleisten jeweils Mantelabschnitte des Mantels darstellen. Dabei versteht es sich, dass ein radialer Durchtritt eines Luftvolumenstroms durch die Mantelleisten hindurch in die Wendetrommel hinein bzw. wieder aus selbiger heraus nicht möglich ist. Allerdings liegen zwischen den Mantelleisten jeweils "Öffnungen" bzw. vielmehr Freiräume vor, die einen eben solchen erfindungsgemäßen Durchtritt eines Luftvolumenstroms durch die Wendetrommel hindurch erlauben.

Vorteilhafterweise wirkt jede der Mantelleisten jeweils mit einer der Radialleisten zu, sodass jede Mantelleiste gewissermaßen eine Basis für die zugehörige Radialleiste bildet. Letztere erstreckt sich bei dieser Ausführung ausgehend von der zugehörigen Mantelleiste relativ zu der Wendetrommel betrachtet radial nach außen.

Bei Verwendung der genannten Mantelleisten ist es besonders von Vorteil, wenn die sich zwischen den Mantelleisten in Umfangsrichtung der Wendetrommel erstreckenden Mantelbereiche zumindest im Wesentlichen, vorzugsweise vollständig, offen ausgebildet sind, sodass ein Luftvolumenstrom durch diese offenen Mantelbereiche ungehindert hindurchtreten kann.

Die erfindungsgemäße Erntemaschine weiter ausgestaltend wirken die Radialleisten jeweils mit einer Mehrzahl von Aussteifungselementen zusammen, die entlang einer Längsachse der jeweilig zugehörigen Radialleiste verteilt angeordnet sind. Bei den Aussteifungselementen kann es sich insbesondere um scheibenförmige Bauteile handeln, die senkrecht zu der Längsachse der zugehörigen Radialleiste orientiert sind und mit der zugehörigen Radialleiste in Kraft übertragender Weise verbunden sind. Auf diese Weise sind die Aussteifungselemente dazu geeignet, auf die Radialleiste wirkende Kräfte abzutragen.

In einer weiterhin besonders vorteilhaften Ausgestaltung der erfindungsgemäßen Erntemaschine sind zumindest zwei in Umfangsrichtung der Wendetrommel betrachtet benachbarte Rand leisten, vorzugsweise sämtliche benachbarten Rand leisten, mittels Aussteifungselementen miteinander gekoppelt. Auf diese Weise können die Radialleisten gemeinsam auf sie wirkende Kräfte abtragen.

Bezogen auf die Radialleisten selbst ist bei der erfindungsgemäßen Erntemaschine vorgesehen, dass diese einen auf eine spezielle Weise ausgebildeten Querschnitt aufweisen. Die Zielsetzung liegt dabei darin, die Radialleisten selbst zur Förderung von Luft zu verwenden, sodass mittels der Wendetrommel eine unmittelbare Luftförderwirkung erzeugbar ist. Zu diesem Zweck ist zumindest ein Teil der Radialleisten, vorzugsweise sämtliche Radialleisten, erfindungsgemäß derart ausgestaltet, dass eine jeweilige Radialleiste in ihrem Querschnitt betrachtet mindestens zwei Wirkungsabschnitte aufweist, nämlich einen radial außenliegenden Reflexionsabschnitt sowie einen radial innenliegenden Förderabschnitt. Die primäre Aufgabe des Reflexionsabschnitts besteht darin, den von dem Dreschorgan in Richtung der Wendetrommel geleiteten Gutstrom umzulenken und auf diese Weise der Trenneinrichtung zuzuführen. Demgegenüber besteht die primäre Aufgabe des Förderabschnitts in der Förderung von Luft. Dies ist insbesondere dann von Vorteil, wenn die Wendetrommel mit einem Abscheideorgan gemäß obiger Beschreibung zusammenwirkt, da auf diese Weise besonders einfach ein gerichteter Luftvolumenstrom erzeugbar ist.

Die Ausgestaltung einer Wendetrommel mittels derartig ausgebildeter Radialleisten ist grundsätzlich unabhängig von der offenen Ausgestaltung der Wendetrommel denkbar. Gleichwohl versteht es sich, dass sich erfindungsgemäß die offene Ausgestaltung und die besondere Ausführung der Radialleisten in der beschriebenen Weise besonders gut ergänzen.

Vorteilhafterweise sind der Reflexionsabschnitt und der Förderabschnitt einer entsprechend ausgebildeten Radialleiste gegenüber einer sich ausgehend von der Rotationsachse der Wendetrommel erstreckenden Radialen zu entgegengesetzten Seiten geneigt ausgeführt. Dabei erstrecken sich vorzugsweise sowohl der Reflexionsabschnitt als auch der Förderabschnitt unter einem Winkel gegenüber der Radialen.

Unabhängig von der übrigen Ausgestaltung kann es weiterhin vorteilhaft sein, wenn der Reflexionsabschnitt und der Förderabschnitt mittels einer Umlenkung voneinander getrennt sind bzw. im Bereich einer Umlenkung aneinander stoßen. Insbesondere kann die Umlenkung die einander zugewandten Enden des Reflexionsabschnitts und des Förderabschnitts markieren. Die Umlenkung kann insbesondere als Bogen oder Knick ausgeführt sein, wobei ein Krümmungsradius eines Bogens erheblich größer ist als derjenige eines Knicks.

Besonders vorteilhaft ist die Ausgestaltung der Umlenkung in Form eines Knicks. Ein Knickwinkel, den einander zugewandte Endabschnitte des Reflexionsabschnitts und des Förderabschnitts gemeinsam einschließen, beträgt vorteilhafterweise mindestens 60°, vorzugsweise mindestens 70°, weiter vorzugsweise mindestens 80°, und vorteilhafterweise maximal 130°, vorzugsweise maximal 120°, weiter vorzugsweise maximal 110°.

Erfindungsgemäß ist zumindest ein Teil der Radialleisten derart gestaltet, dass zumindest der Förderabschnitt - im Querschnitt der Radialleiste betrachtet - zumindest abschnittsweise gekrümmt ausgebildet ist. Auf diese Weise kann der Förderabschnitt gewissermaßen als "Schaufel" wirken, wodurch eine Förderleistung der Wendetrommel (bezogen auf eine Luftförderleistung) gegenüber einer Ausgestaltung der Radialleisten mit einem geraden Förderabschnitt gesteigert werden kann. Vorteilhafterweise ist die Krümmung des Förderabschnitts in Rotationsrichtung der Wendetrommel betrachtet konvex ausgebildet.

Weiterhin kann eine solche Ausgestaltung der Radialleisten von Vorteil sein, bei der der jeweilige Reflexionsabschnitt zumindest eines Teils der Radialleisten, vorzugsweise sämtlicher Radialleisten, kammförmig ausgebildet ist. Ein derart ausgebildeter Reflexionsabschnitt umfasst vorzugsweise - entlang einer Längsachse der jeweiligen Radialleiste betrachtet - äquidistant angeordnete Stege, die sich ausgehend von einer Basis des Reflexionsabschnitts parallel zueinander erstrecken. Ein derart ausgebildeter Reflexionsabschnitt kann eine ausreichende Reflexionswirkung, das heißt Umlenkungswirkung, auf den umzulenkenden Gutstrom ausüben, gleichzeitig jedoch aufgrund der aufgelösten, kammartigen Form einen bezogen auf die Wendetrommel radial strömenden Luftvolumenstrom passieren lassen, letzteres zumindest besser als bei Ausführung des Reflexionsabschnitts in einer geschlossenen Weise.

Ausgehend von dem Verfahren der eingangs beschriebenen Art wird die zugrunde liegende Aufgabe erfindungsgemäß durch die Merkmale des Anspruchs 11 gelöst. Das erfindungsgemäße Verfahren ist dabei insbesondere durch den folgenden Verfahrensschritt gekennzeichnet:
f) Die Wendetrommel wird von einem Luftvolumenstrom in eine Richtung ausgehend von dem Förderorgan hin zu der Trenneinrichtung radial durchströmt.

Das erfindungsgemäße Verfahren ist mittels der erfindungsgemäßen Vorrichtung besonders einfach durchführbar. Die sich ergebenden Vorteile sind vorstehend bereits ausführlich erläutert. Insbesondere bietet die radiale Durchströmung der Wendetrommel eine Möglichkeit zur Entlastung des im Bereich des Förderorgans vorliegenden Überdrucks, der gewissermaßen durch die Wendetrommel hindurch in Richtung der Trenneinrichtung strömen kann. Ein Austritt eines Luftvolumenstroms aus einem vorderen Ende des Förderorgans inklusive eines damit verbundenen Auftrags von Staub an dem vorderen Ende der Erntemaschine ist entsprechend vermieden.

Das erfindungsgemäße Verfahren ist dann besonders von Vorteil, wenn mittels der Wendetrommel ein Luftvolumenstrom ausgehend von einem Bereich des Förderorgans bzw. des Dreschorgans in Richtung eines Bereich der Trenneinrichtung gefördert wird, wobei dieser Luftvolumenstrom vorteilhafterweise mindestens 1.500 m³/h, vorzugsweise mindestens 1.750 m³/h, weiter vorzugsweise mindestens 2.000 m³/h, umfasst. Die aktive Förderung eines Luftvolumenstroms mittels der Wendetrommel gewissermaßen in Längsrichtung der Erntemaschine von vorne nach hinten ist besonders gut geeignet, um im Frontbereich der Erntemaschine anfallenden Staub in deren Heckbereich abzusaugen.

Die erfindungsgemäße Maschine sowie das erfindungsgemäße Verfahren werden nachstehend anhand eines Ausführungsbeispiels, das in den Figuren dargestellt ist, näher erläutert. Es zeigt:
- Fig. 1:: Einen Querschnitt durch eine erfindungsgemäße Erntemaschine,
- Fig. 2:: Ein Detail eines Vorderbereichs der erfindungsgemäßen Erntemaschine gemäß Figur 1,
- Fig. 3:: Eine perspektivische Ansicht des Dreschorgans gemeinsam mit der Wendetrommel der erfindungsgemäßen Erntemaschine gemäß Figur 1,
- Fig. 4:: Eine perspektivische Ansicht der erfindungsgemäßen Wendetrommel gemäß Figur 3,
- Fig. 5:: Einen Querschnitt durch ein Dreschorgan gemeinsam mit einer alternativen erfindungsgemäßen Wendetrommel in einer Einbausituation in einer erfindungsgemäßen Erntemaschine und
- Fig. 6:: Einen Querschnitt durch die alternative Wendetrommel gemäß Figur 5.

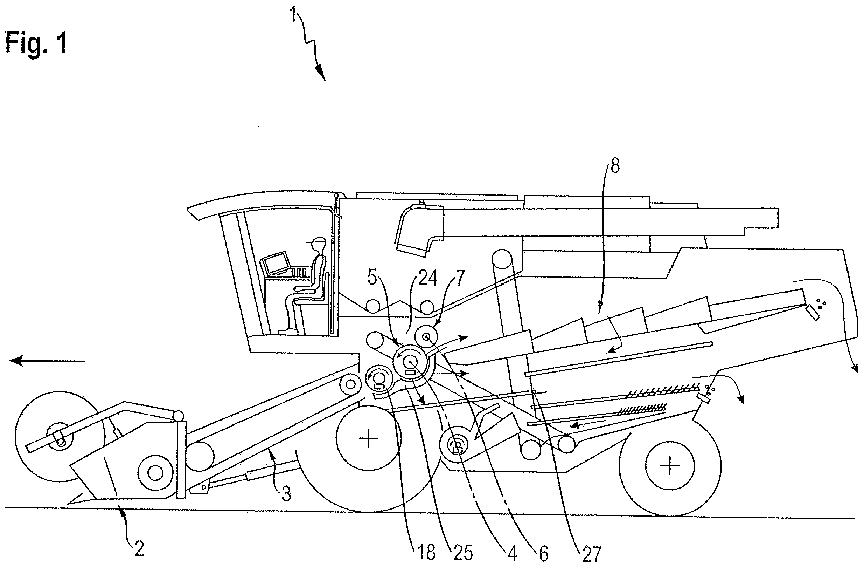

Ein erstes Ausführungsbeispiel, das in den **Figuren 1 bis 4** gezeigt ist, umfasst eine erfindungsgemäße Erntemaschine **1,** die an einem vorderen Ende ein Schneidwerk **2,** ein dem Schneidwerk **2** nachgeschaltetes Förderorgan **3** sowie ein Dreschorgan **5** umfasst. Mittels des Schneidwerks **2** können zu erntende Pflanzen, beispielsweise Getreide, geschnitten werden, sodass diese mittels des Förderorgans **3** in Richtung des Dreschorgans **5** förderbar sind. Das Dreschorgan **5** ist hier in Form einer mit Dreschmitteln **21** bestückten Dreschtrommel ausgeführt, die um eine Rotationsachse **4** drehbar gelagert ist. Mittels des Dreschorgans **5** können Früchte von den geernteten Pflanzen gelöst werden, sodass die Früchte fortan losgelöst von Pflanzenresten der Pflanzen vorliegen. Das Dreschorgan **5** ist in einem unteren Abschnitt entlang eines Teil seines Umfangs von einem Dreschkorb **25** begrenzt, wobei das Dreschorgan **5** und der Dreschkorb **25** gemeinsam einen Dreschspalt begrenzen. Der Dreschkorb **25** ist dazu geeignet, mittels des Dreschorgans **5** von den Pflanzen gelöste Früchte unmittelbar in Richtung eines Vorbereitungsbodens **27** abzuführen. Dem Dreschorgan **5** ist in dem gezeigten Beispiel ein Beschleunigungsorgan **18** vorgeschaltet, mittels dessen der mittels des Förderorgans **3** geförderte Gutstrom vor der Zuführung zu dem Dreschorgan **5** beschleunigt wird.

In Strömungsrichtung des Gutstroms betrachtet ist dem Dreschorgan **5** eine erfindungsgemäße Wendetrommel **7** nachgeschaltet, die um drehantreibbar um eine Rotationsachse **6** gelagert ist. Diese dient dazu, den von dem Dreschorgan **5** übergebenen Gutstrom in Richtung einer Trenneinrichtung **8** umzulenken und somit an die Trenneinrichtung **8** zu übergeben. Die Umlenkung des Gutstroms findet in einem Umlenkungsbereich **20** der Wendetrommel **7** statt. In dem gezeigten Beispiel wird der Gutstrom ausgehend von dem Dreschorgan **5** unmittelbar an die Wendetrommel **7** übergeben. Eine indirekte Übergabe unter Zwischenschaltung mindestens eines weiteren Organs ist gleichwohl ebenso denkbar. Die Trenneinrichtung **8,** die hier in Form eines Hordenschüttlers ausgebildet ist, ist dazu geeignet, die in dem übergebenen Gutstrom enthaltenen losen Früchte von den Pflanzenresten zu trennen.

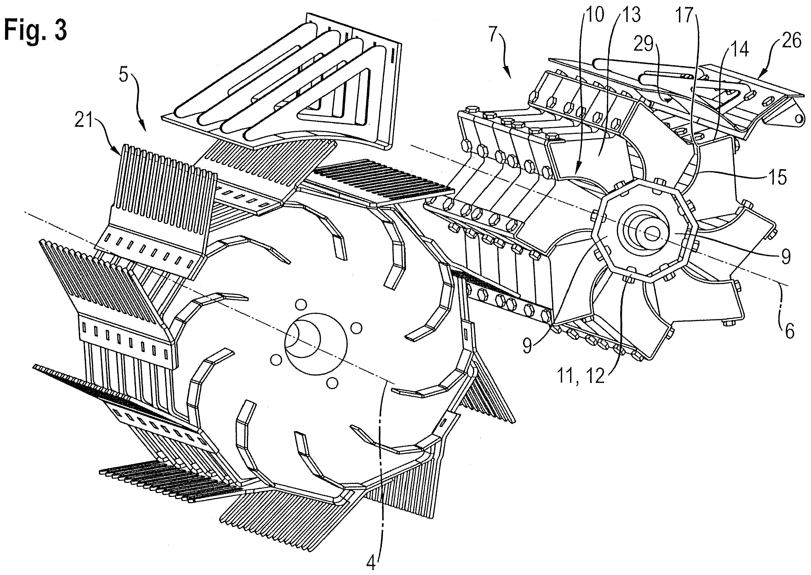

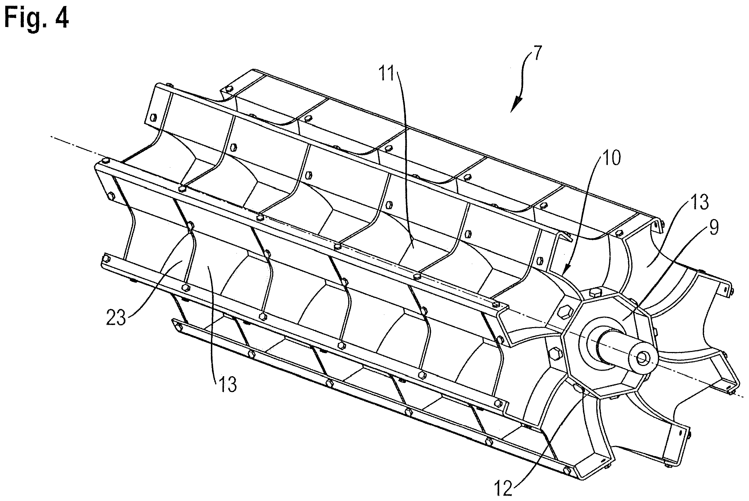

Die erfindungsgemäße Wendetrommel **7,** die sich besonders gut anhand der **Figuren 3** **und** **4** ergibt, umfasst zwei einander gegenüberliegende Stirnseiten **9,** zwischen denen sich Radialleisten **10** erstrecken. In dem gezeigten Beispiel wirken die Radialleisten **10** jeweils mit einer zugehörigen Mantelleiste **12** zusammen, wobei sich die Mantelleisten **12** gleichermaßen zwischen den gegenüberliegenden Stirnseiten **9** der Wendetrommel **7** erstrecken. Die Radialleisten **10** gehen jeweils von der zugehörigen Mantelleiste **12** aus und erstrecken sich in radiale Richtung relativ zu einer Rotationsachse **6** der Wendetrommel **7.** Die Mantelleisten **12** bilden gewissermaßen einen aufgelösten äußeren Mantel **11** der Wendetrommel **7,** wobei sich in Umfangsrichtung der Wendetrommel **7** erstreckende Zwischenbereiche zwischen benachbarten Mantelleisten **12** in dem gezeigten Beispiel vollständig geöffnet sind. Der "Mantel **11"** der erfindungsgemäßen Wendetrommel **7** besteht in dem gezeigten Ausführungsbeispiel entsprechend lediglich in einer stark aufgelösten Form, nämlich in den einzelnen, hier nicht unmittelbar miteinander verbundenen Mantelleisten **12.** Sowohl die Mantelleisten **12** als auch die Radialleisten **10** sind in dem gezeigten Beispiel gerade, das heißt parallel zu der Rotationsachse **6** der Wendetrommel **7,** ausgebildet.

Die Radialleisten **10** wirken jeweils einer Mehrzahl von Aussteifungselementen **13** zusammen, die hier äquidistant entlang einer Längsachse einer jeweiligen Radialleiste **10** verteilt angeordnet sind. Endseitige Aussteifungselemente **13** sind dabei unmittelbar an die Stirnseiten **9** der Wendetrommel **7** angeschlossen. Im Übrigen sind die Aussteifungselemente **13** jeweils an eine jeweilige benachbarte Radialleiste **10** angeschlossen. Auf diese Weise sind die Radialleisten **10** miteinander verbunden, sodass sie auf die Wendetrommel **7** einwirkende Kräfte, insbesondere im Zuge der Umlenkung des Gutstroms, gemeinsam abtragen. In dem gezeigten Beispiel wirkt jede der Radialleisten **10** mit insgesamt sechs Aussteifungselementen **13** zusammen.

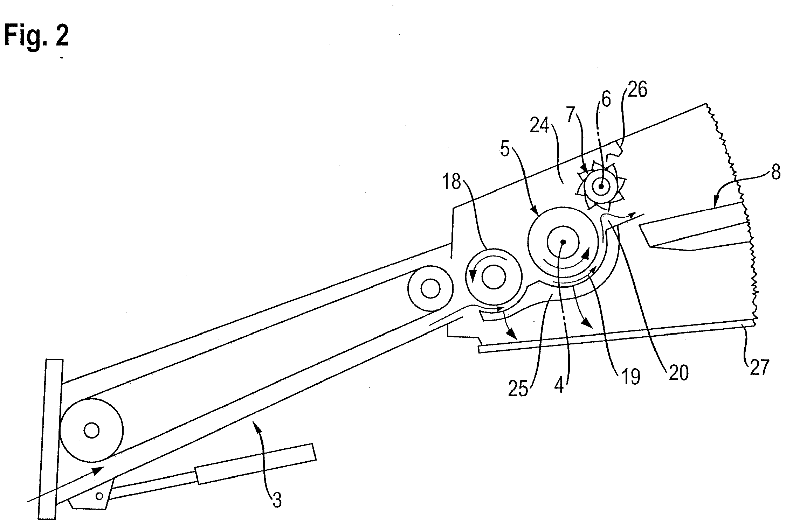

In dem gezeigten Ausführungsbeispiel wirkt die Wendetrommel **7** mit einem Abscheideorgan **26** zusammen. Dies ergibt sich besonders gut anhand der **Figuren 2** **und** **3****.** Das Abscheideorgan **26** ist in einem oberen Bereich der Wendetrommel **7** angeordnet und erstreckt sich parallel zu der Rotationsachse **6** der Wendetrommel **7** entlang derer gesamten Länge. Das Abscheideorgan **26** ist dabei so positioniert, dass zwischen einer Umlauffläche der Wendetrommel **7,** das heißt am weitesten radial außen befindlichen Stellen der Radialleisten **10,** und einem der Wendetrommel **7** zugewandten Ende des Abscheideorgans lediglich ein minimaler Abstand vorliegt. Dieser Abstand beträgt in dem gezeigten Beispiel ca. 2 cm. Das Abscheideorgan **26** hat den technischen Effekt, von der Wendetrommel **7** im Zuge ihrer Rotation um ihre Rotationsachse **6** "mitgeschleppte" Luft abzuscheiden, sodass eine reine Kreisströmung der Luft gemeinsam mit der Wendetrommel **7** unterbunden wird. Auf diese Weise wird auf einer Seite der Wendetrommel **7,** auf der die Luft abgeschieden wird, ein Überdruck erzeugt, während auf der jeweils abgewandten Seite ein Unterdruck erzeugt wird. Die sich so einstellenden Druckverhältnisse bewirken letztlich eine gerichtete Luftströmung von der einen Seite der Wendetrommel **7** zu der anderen Seite. Zur Erzielung einer Sogwirkung im vorderen Bereich der Erntemaschine **1** versteht es sich, dass das Abscheideorgan **26** auf der dem Förderorgan **3** abgewandten Seite der Wendetrommel **7** positioniert wird. Der erzeugte Luftvolumenstrom kann die Wendetrommel **7** aufgrund ihrer geöffneten Bauweise radial durchströmen.

In dem gezeigten Beispiel umfasst das Abscheideorgan einen Wirkungsabschnitt **29,** mit dem sich das Abscheideorgan **26** in Umfangsrichtung der Wendetrommel **7** betrachtet über einen Winkelbereich derselben erstreckt. Dieser Winkelbereich beträgt hier ca. 30°. Der Wirkungsabschnitt **29** ist hier von einem gebogenen Blech gebildet, dessen Radius an die Umfangsfläche der Wendetrommel **7** angepasst ist, sodass radial äußere Stellen der Radialleisten **10** den Wirkungsabschnitt **29** in einem konstanten Abstand entlang des Winkelbereichs passieren. Eine solche Ausführung des Abscheideorgans **26** hat sich hinsichtlich der Abscheidungswirkung desselben als besonders vorteilhaft herausgestellt.

Die Radialleisten **10** sind in dem gezeigten Beispiel der Wendetrommel **7** auf eine besondere Weise ausgeführt, die es der Wendetrommel **7** erlaubt, neben der Funktion der Umlenkung des Gutstroms von dem Dreschorgan **5** hin zu Trenneinrichtung **8** ferner eine Luftförderfunktion wahrzunehmen. Wie sich besonders gut anhand von **Figur 3** ergibt, weist jede der Radialleisten **10** in einem Querschnitt betrachtet zwei Wirkungsabschnitte auf, nämlich einen Förderabschnitt **15** und einen Reflexionsabschnitt **14.** Der Förderabschnitt **15** erstreckt sich unmittelbar anschließend an die jeweilig zugehörigen Mantelleiste **12** relativ zu der Rotationsachse sechste Wendetrommel **7** betrachtet radial nach außen, während der Reflexionsabschnitt **14** an einem der Rotationsachse **6** abgewandten Ende des Förderabschnitts **15** angeschlossen ist. In einem Übergangsbereich von dem Förderabschnitt **15** hin zu dem Reflexionsabschnitt **14** umfasst die Radialleiste **10** eine Umlenkung **17** in Form eines Knicks. Die einander zugewandten Endbereiche des Förderabschnitt **15** und des Reflexionsabschnitt **14** schließen hierdurch gemeinsam einen Winkel von ca. 90° ein.

Die Reflexionsabschnitte **14** der Radialleisten **10** erfüllen die Funktion der Umlenkung des Gutstroms hin zu der Trenneinrichtung **8.** Die Förderabschnitte **15** dienen demgegenüber primär der Erzeugung eines Luftvolumenstroms, mittels dessen in dem Frontbereich der Erntemaschine **1** anfallender Staub abgesaugt und in Richtung der rückwärtigen Trenneinrichtung **8** gefördert werden kann. Aufgrund der offenen Ausführung der erfindungsgemäßen Wendetrommel **7** ist es dabei möglich, dass ein solcher Luftvolumenstrom die Wendetrommel **7** radial durchströmt. Mit anderen Worten ist aufgrund der offenen Ausgestaltung der Wendetrommel **7** die Möglichkeit geschaffen, Luft aus einer in Längsrichtung der Erntemaschine **1** betrachtet der Wendetrommel **7** vorgeschalteten Luftkammer **24** durch die Wendetrommel **7** hindurch in einen Bereich der Trenneinrichtung **8** zu leiten. Hierfür ist es besonders vorteilhaft und in dem gezeigten Beispiel auch ausgeführt, wenn die Radialleisten **10** mindestens in ihrem Förderabschnitt **15** gekrümmt ausgeführt sind, sodass sie gewissermaßen als Schaufeln wirken können. Hierdurch wird die Luftförderleistung der Wendetrommel **7** insgesamt gesteigert. Dabei versteht es sich, ist die Krümmung der Radialleisten relativ zu der Rotationsrichtung der Wendetrommel betrachtet (diese ist in den **Figuren 1 bis 4** durchweg entgegen dem Uhrzeigersinn orientiert) konvex ausgeformt sind.

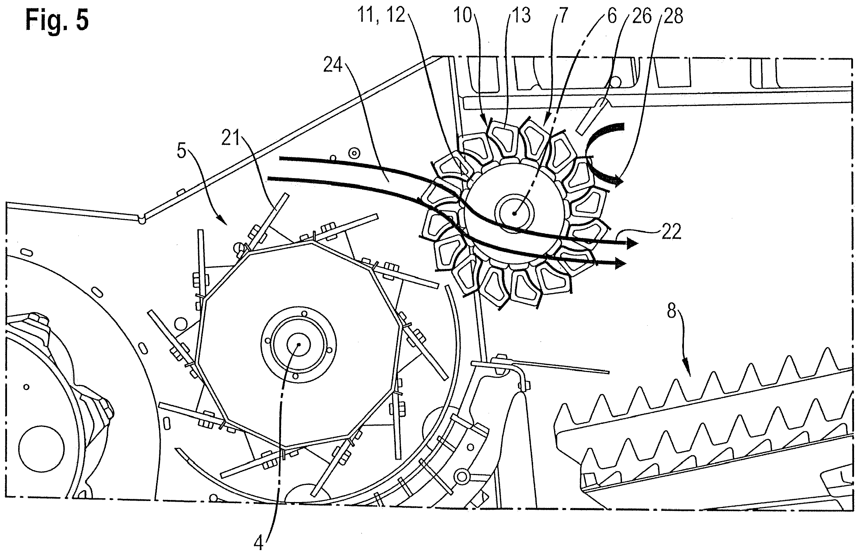

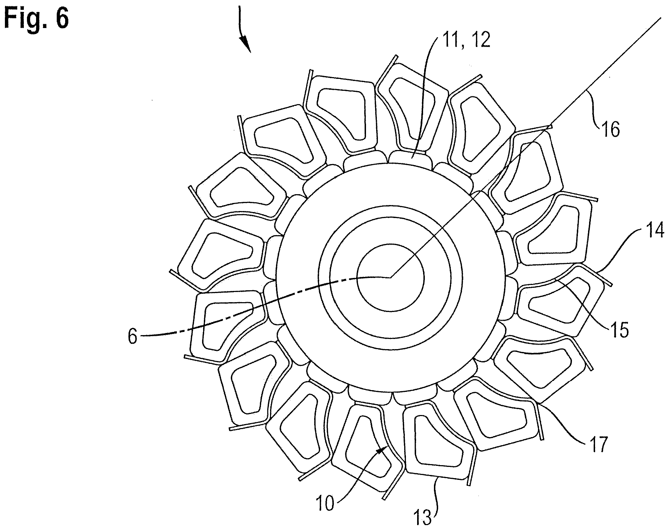

Die Aussteifungselemente **13** sind in dem gezeigten Beispiel in etwa L-förmig ausgebildet, wobei ein jeweiliges Aussteifungselement **13** die zugehörige Radialleiste **10** entlang ihrer gesamten Kontur stützt. Die Aussteifungselemente **13** sind zusätzlich zu der jeweils zugehörigen Radialleiste **10** ferner mit der in Rotationsrichtung der Wendetrommel **7** nachgeschalteten Radialleiste **10** in Kraft übertragender Weise verbunden. Hierdurch steifen sich die Radialleisten **10** gegeneinander aus. Aufgrund der beschriebenen besonderen Ausgestaltung der Radialleisten **10** ergibt sich gewissermaßen zwischen benachbarten Aussteifungselementen **13** eine Art Trichter, dessen Querschnitt von einem radial außenliegenden Ende sich zumindest abschnittsweise in Richtung eines radial innenliegenden Endes verjüngt. Dies ergibt sich nachstehend besonders gut anhand des zweiten Ausführungsbeispiels, das in den **Figuren 5** **und** **6** dargestellt ist.

Besagtes zweites Ausführungsbeispiel umfasst eine von der Wendetrommel **7** gemäß dem ersten Ausführungsbeispiel abweichende Wendetrommel **7.** Die Wendetrommeln **7** der beiden Ausführungsbeispiele unterscheiden sich in zweierlei Hinsicht: zum einen umfasst diejenige gemäß den zweiten Ausführungsbeispiel insgesamt 16 Radialleisten **10,** während die Wendetrommel **7** gemäß dem ersten Ausführungsbeispiel lediglich acht Radialleisten **10** aufweist. Weiterhin sind die Aussteifungselemente **13** der Wendetrommel **7** gemäß dem zweiten Ausführungsbeispiel abweichend ausgeführt, da sie gegenüber einer vollflächigen Ausgestaltung des ersten Ausführungsbeispiels nunmehr lediglich in Form eines Rahmens ausgebildet sind.

Auch die Radialleisten **10** der Wendetrommel **7** gemäß dem zweiten Ausführungsbeispiel umfassen jeweils einen Reflexionsabschnitt **14** und einen Förderabschnitt **15.** Beide Abschnitte **14**, **15** sind gegen eine Radiale **16** geneigt ausgeführt, wobei sich der Förderabschnitt **15** und der Reflexionsabschnitt **14** zu entgegengesetzten Seiten gegenüber der Radialen **16** erstrecken.

Die zweite Variante der erfindungsgemäßen Wendetrommel **7** ist anhand von **Figur 5** besonders gut in einer Einbausituation erkennbar. Auch in diesem Beispiel wirkt die Wendetrommel **7** mit einem Abscheideorgan **26** zusammen, das hier abweichend von demjenigen gemäß dem ersten Ausführungsbeispiel vereinfacht in Form eines langgestreckten Blechs gebildet ist. Die Funktion des Abscheideorgans **26** ist jedoch grundsätzlich identisch, nämlich die Unterbrechung bzw. Abscheidung eines von der Wendetrommel **7** mitgeschleppten Tangentialluftvolumenstroms. Wie sich aus **Figur 5** besonders gut ergibt, begrenzen die Wendetrommel **7** und das Abscheideorgan **26** gemeinsam eine Art Wirbelkammer, in der die abgeschiedene Luft von ihrer Tangentialrichtung relativ zu der Wendetrommel **7** umgelenkt und hierdurch verwirbelt wird. Ein sich einstellender Luftwirbel **28** ist in **Figur 5** mittels eines Pfeils veranschaulicht.

Die Abscheidung des Tangentialluftvolumenstroms ermöglicht schließlich die Ausbildung einer Druckdifferenz zwischen den einander gegenüberliegenden Seiten der Wendetrommel **7,** woraus sich letztlich ein wunschgemäßer gerichteter Luftvolumenstrom **22** ergibt. Diese ist in **Figur 5** mittels zweier Pfeile veranschaulicht. Der gerichtete Luftvolumenstrom **22** erstreckt sich ausgehend von der der Wendetrommel **7** vorgeschalteten Luftkammer **24** in Richtung der Trenneinrichtung **8.** Eine Rückführung von Luft in Richtung des Schneidwerks **2** tritt somit nicht auf, wodurch der erfindungsgemäße Erfolg der Staubvermeidung im Frontbereich der Erntemaschine **1** erzielt wird.
- 1: Erntemaschine
- 2: Schneidwerk
- 3: Förderorgan
- 4: Rotationsachse
- 5: Dreschorgan
- 6: Rotationsachse
- 7: Wendetrommel
- 8: Trenneinrichtung
- 9: Stirnseite
- 10: Radialleiste
- 11: Mantel der Wendetrommel
- 12: Mantelleiste
- 13: Aussteifungselement
- 14: Reflexionsabschnitt
- 15: Förderabschnitt
- 16: Radiale der Wendetrommel
- 17: Umlenkung
- 18: Beschleunigungsorgan
- 19: Gutstrom
- 20: Umlenkungsbereich
- 21: Dreschmittel
- 22: Luftvolumenstrom
- 23: Trichter
- 24: Luftkammer
- 25: Dreschkorb
- 26: Abscheideorgan
- 27: Luftwirbel
- 28: Wirkungsabschnitt

## Patentansprüche

1. Erntemaschine (1), insbesondere ein selbstfahrender Mähdrescher zum Ernten von Getreide, umfassend:
- mindestens ein Schneidwerk (2) zum Schneiden mittels der Erntemaschine (1) zu erntender Pflanzen,
- mindestens ein Förderorgan (3) zur Förderung der geschnittenen Pflanzen,
- mindestens ein langgestrecktes, um eine Rotationsachse (4) drehantreibbares Dreschorgan (5), mittels dessen derart Früchte von den geschnittenen Pflanzen ablösbar sind, dass die Früchte sodann losgelöst von Pflanzenresten der geschnittenen Pflanzen vorliegen,
- mindestens eine langgestreckte, um eine Rotationsachse (6) drehantreibbare Wendetrommel (7), sowie
- mindestens eine Trenneinrichtung (8) zur Trennung abgelöster Früchte von Pflanzenresten,
wobei mittels des Förderorgans (3) die geschnittenen Pflanzen zu dem Dreschorgan (5) förderbar sind,
wobei mittels der Wendetrommel (7) ein von dem Dreschorgan (5) ausgehender, sowohl lose Früchte als auch Pflanzenreste enthaltender Gutstrom an die nachgeschaltete Trenneinrichtung (8) übergebbar ist, wobei mittels der Wendetrommel (7) zumindest eine Hauptströmungsrichtung des Gutstroms veränderbar ist,
wobei die Wendetrommel (7) eine Mehrzahl langgestreckter, sich zwischen gegenüberliegenden Stirnseiten (9) der Wendetrommel (7) erstreckender Radialleisten (10) aufweist, die sich jeweils von der Rotationsachse (6) der Wendetrommel (7) betrachtet radial nach außen erstrecken,
wobei die Wendetrommel (7) derart geöffnet ausgebildet ist, dass sie von einem Luftvolumenstrom radial durchströmbar ist,
**dadurch gekennzeichnet, dass**
zumindest ein Teil der Radialleisten (10), vorzugsweise sämtliche Radialleisten (10), in einem Querschnitt betrachtet mindestens zwei Wirkungsabschnitte aufweist bzw. aufweisen, nämlich einen radial außenliegenden Reflexionsabschnitt (14) sowie einen radial innenliegenden Förderabschnitt (15), wobei vorzugsweise der Reflexionsabschnitt (14) und der Förderabschnitt (15) gegenüber einer sich ausgehend von der Rotationsachse (6) der Wendetrommel (7) erstreckenden Radialen (16) entgegengesetzt geneigt sind, und dass der Förderabschnitt (15) - im Querschnitt der jeweiligen Radialleiste (10) betrachtet - zumindest abschnittsweise gekrümmt ausgebildet ist.

2. Erntemaschine (1) nach Anspruch 1, **dadurch gekennzeichnet, dass** mindestens 50 %, vorzugsweise mindestens 60 %, weiter vorzugsweise mindestens 70 %, eines äußeren Mantels (11) der Wendetrommel (7) geöffnet ausgebildet sind.

3. Erntemaschine (1) nach Anspruch 1 oder 2, **gekennzeichnet durch** ein langgestrecktes Abscheideorgan (26), das sich parallel zu der Rotationsachse (6) der Wendetrommel (7) erstreckt und derart mit der Wendetrommel (7) zusammenwirkt, dass ein tangential von den Radialleisten (10) der Wendetrommel (7) mitgeschleppter Luftvolumenstrom mittels des Abscheideorgans (26) abscheidbar ist.

4. Erntemaschine (1) nach Anspruch 3, **dadurch gekennzeichnet, dass** das Abscheideorgan (26) sich tangential entlang einer Umlauffläche der Radialleisten (10) der Wendetrommel (7) erstreckt, vorzugsweise über einen relativ zu der Rotationsachse (6) der Wendetrommel (7) gemessenen Winkelbereich von mindestens 10°, vorzugsweise mindestens 20°, weiter vorzugsweise mindestens 30°.

5. Erntemaschine (1) nach einem der Ansprüche 1 bis 4, **dadurch gekennzeichnet, dass** ein äußerer Mantel (11) der Wendetrommel (7) von einer Mehrzahl, vorzugsweise entlang eines Umfangs der Wendetrommel (7) betrachtet äquidistant angeordneter, Mantelleisten (12) gebildet ist, die sich zwischen den gegenüberliegenden Stirnseiten (9) der Wendetrommel (7) erstrecken, wobei vorzugsweise die Mantelleisten (12) jeweils mit jeweils einer Radialleiste (10) zusammenwirken, wobei sich eine jeweilige Radialleiste (10) ausgehend von der zugehörigen Mantelleiste (12) - relativ zu der Wendetrommel (7) betrachtet - radial nach außen erstreckt.

6. Erntemaschine (1) nach einem der Ansprüche 1 bis 5, **dadurch gekennzeichnet, dass** die Radialleisten (10) jeweils mit einer Mehrzahl von Aussteifungselementen (13) zusammenwirken, wobei die Aussteifungselemente (13) einer jeweiligen Radialleiste (10) entlang einer Längsachse (14) der letzteren verteilt angeordnet sind.

7. Erntemaschine (1) nach einem der Ansprüche 1 bis 6, **dadurch gekennzeichnet, dass** mindestens zwei in Umfangsrichtung der Wendetrommel (7) benachbarte Radialleisten (10), vorzugsweise sämtliche benachbarten Radialleisten (10), mittels Aussteifungselementen (13) miteinander gekoppelt sind.

8. Erntemaschine (1) nach Anspruch 1, **dadurch gekennzeichnet, dass** der Reflexionsabschnitt (14) und der Förderabschnitt (15) mittels einer Umlenkung (17) voneinander getrennt sind, insbesondere mittels eines Knicks.

9. Erntemaschine (1) nach Anspruch 8, **dadurch gekennzeichnet, dass** der Förderabschnitt (15) - im Querschnitt der jeweiligen Radialleiste (10) betrachtetzumindest abschnittsweise gekrümmt ausgebildet ist, und die Krümmung - relativ zu einer Rotationsrichtung der Wendetrommel (7) betrachtet - konvex ausgebildet ist.

10. Erntemaschine (1) nach einem der Ansprüche 8 bis 9, **dadurch gekennzeichnet, dass** der jeweilige Reflexionsabschnitt (14) zumindest eines Teils der Radialleisten (10), vorzugsweise sämtlicher Radialleisten (10), kammförmig ausgebildet ist, wobei vorzugsweise sich - entlang einer Längsachse der jeweiligen Radialleiste (10) betrachtet - äquidistant angeordnete Stege ausgehend von einer Basis des Reflexionsabschnitts (14) parallel zueinander erstrecken.

11. Verfahren zum Betrieb einer Erntemaschine (1), insbesondere eines selbstfahrenden Mähdreschers zum Ernten von Getreide, umfassend die folgenden Verfahrensschritte:
a) Mittels der Erntemaschine (1) zu erntende Pflanzen werden mittels eines Schneidwerks (2) geschnitten.
b) Mittels eines Förderorgans (3) werden die geschnittenen Pflanzen ausgehend von dem Schneidwerk (2) in Richtung eines Dreschorgans (5) gefördert.
c) Mittels des Dreschorgans (5) werden derart Früchte von den geschnittenen Pflanzen gelöst, dass anschließend die Früchte unverbunden mit Pflanzenresten der geschnittenen Pflanzen vorliegen.
d) Mittels einer Wendetrommel (7) wird ein von dem Dreschorgan (5) ausgehender, sowohl Pflanzenreste als auch lose Früchte enthaltender Gutstrom an eine Trenneinrichtung (8) übergeben, wobei im Zuge der Übergabe zumindest eine Hauptströmungsrichtung des Gutstroms verändert wird.
e) Mittels der Trenneinrichtung (8) werden die losen Früchte von den Pflanzenresten getrennt,
**gekennzeichnet durch** den folgenden Verfahrensschritt:
f) Die Wendetrommel (7) wird von einem Luftvolumenstrom in eine Richtung ausgehend von einer dem Förderorgan (3) zugewandten Bereich hin zu der Trenneinrichtung (8) radial durchströmt.

12. Verfahren nach Anspruch 11, **dadurch gekennzeichnet, dass** mittels der Wendetrommel (7) aktiv ein Luftvolumenstrom ausgehend von einem dem Förderorgan (3) zugewandten Bereich in Richtung eines dem Förderorgan (3) abgewandten Bereichs der Wendetrommel (7) gefördert wird, wobei vorzugsweise der Luftvolumenstrom mindestens 1500 m³/h, vorzugsweise mindestens 1750 m³/h, weiter vorzugsweise mindestens 2000 m³/h, beträgt.

## Claims

1. A harvesting machine (1), in particular a self-propelled combine harvester for harvesting grain, comprising:
- at least one cutting assembly (2) for cutting plants to be harvested by means of the harvesting machine (1),
- at least one conveyor means (3) for conveying the cut plants,
- at least one longitudinally extending threshing means (5) which can be driven in rotation about a rotary axis (4), by means of which fruits can be removed from the cut plants such that the fruits provided are then detached from the plant residues of the cut plants,
- at least one longitudinally extending impeller (7) which can be driven in rotation about a rotary axis (6), as well as
- at least one separating device (8) for separating fruits detached from plant residues,
wherein the cut plants can be conveyed to the threshing means (5) by means of the conveyor means (3),
wherein, by means of the impeller (7), a flow of crop emanating from the threshing means (5), containing both loose fruits as well as plant residues, can be transferred to the separating device (8) which is connected downstream, wherein by means of the impeller (7), at least one main flow direction of the flow of crop can be varied, wherein the impeller (7) has a plurality of longitudinally extending radial bars (10) extending between opposite ends (9) of the impeller (7) and which respectively extend radially outwardly with respect to the rotary axis (6) of the impeller (7),
wherein
the impeller (7) is open in configuration, such that a volumetric air flow can pass radially through it,
**characterized in that**
at least a portion of the radial bars (10), preferably all of the radial bars (10), has or have at least two action sections with respect to the cross section, namely a radially outwardly located reflecting section (14) as well as a radially inwardly located conveying section (15), wherein preferably, the reflecting section (14) and the conveying section (15) are inclined in opposite directions with respect to a radial (16) extending outwards from the rotary axis (6) of the impeller (7),
and **in that** the conveying section (15) - with respect to the cross section of the respective radial bar (10) - is curved in configuration, at least in sections.

2. The harvesting machine (1) according to claim 1, **characterized in that** at least 50%, preferably at least 60%, more preferably at least 70% of an outer shell (11) of the impeller (7) is open in configuration.

3. The harvesting machine (1) according to claim 1 or claim 2, **characterized by** a longitudinally extending separating means (26) which extends parallel to the rotary axis (6) of the impeller (7) and cooperates with the impeller (7) in a manner such that a volumetric air flow which is entrained tangentially to the radial bars (10) of the impeller (7) can be separated by means of the separating means (26).

4. The harvesting machine (1) according to claim 3, **characterized in that** the separating means (26) extends tangentially along a circumferential surface of the radial bars (10) of the impeller (7), preferably over an angular range of at least 10°, preferably at least 20°, more preferably at least 30° relative to the rotary axis (6) of the impeller (7).

5. The harvesting machine (1) according to one of claims 1 to 4, **characterized in that** an outer shell (11) of the impeller (7) is formed by a plurality of shell bars (12) which are preferably disposed equidistantly along a perimeter of the impeller (7) and which extend between the opposite ends (9) of the impeller (7), wherein preferably, the respective shell bars (12) each cooperate with a respective radial bar (10), wherein a respective radial bar (10) extends radially outwardly - with respect to the impeller (7) - from the associated shell bar (12).

6. The harvesting machine (1) according to one of claims 1 to 5, **characterized in that** the radial bars (10) respectively cooperate with a plurality of stiffening elements (13), wherein the stiffening elements (13) of a respective radial bar (10) are distributed along a longitudinal axis (14) of the latter.

7. The harvesting machine (1) according to one of claims 1 to 6, **characterized in that** at least two radial bars (10) which are adjacent in the circumferential direction of the impeller (7), preferably all of the adjacent radial bars (10), are coupled together by means of stiffening elements (13).

8. The harvesting machine (1) according to claim 1, **characterized in that** the reflecting section (14) and the conveying section (15) are separated from each other by means of a deflection (17), in particular by means of a sharp bend.

9. The harvesting machine (1) according to claim 8, **characterized in that** the conveying section (15) - with respect to the cross section of the respective radial bar (10) - is curved in configuration at least in sections, and the curvature - with respect to a direction of rotation of the impeller (7) - is convex in configuration.

10. The harvesting machine (1) according to claim 8 to claim 9, **characterized in that** the respective reflecting section (14) of at least a portion of the radial bars (10), preferably of all of the radial bars (10), is comb-like in configuration, wherein preferably - with respect to a longitudinal axis of the respective radial bar (10) - equidistantly disposed webs extend outwards and parallel to each other from a base of the reflecting section (14).

11. A method for operating a harvesting machine (1), in particular a self-propelled combine harvester for harvesting grain, comprising the following steps of the method:
a) plants to be harvested by the harvesting machine (1) are cut by means of a cutting assembly (2),
b) the cut plants emanating from the cutting assembly (2) are conveyed in the direction of a threshing means (5) by means of a conveyor means (3),
c) fruits from the cut plants are detached by means of the threshing means (5) in a manner such that subsequently, the fruits are available disconnected from plant residues of the cut plants,
d) a flow of crop emanating from the threshing means (5), containing plant residues as well as loose fruits, is transferred to a separating device (8) by means of an impeller (7), wherein during the transfer, at least one main direction of flow of the flow of crop is changed,
e) the loose fruits are separated from the plant residues by means of the separating device (8),
**characterized by** the following step of the method:
f) a volumetric flow of air is passed radially through the impeller (7) in a direction outward from a region which faces the conveyor means (3) to the separating device (8).

12. The method according to claim 11, **characterized in that**, by means of the impeller (7), a volumetric air flow is actively conveyed outward from a region which faces the conveyor means (3) in the direction of a region of the impeller (7) which faces away from the conveyor means (3), wherein preferably, the volumetric air flow is at least 1500 m³/h, preferably at least 1750 m³/h, more preferably at least 2000 m³/h.

## Revendications

1. Machine de récolte (1), en particulier une moissonneuse-batteuse automotrice pour récolter des céréales, comprenant :
- au moins un tablier de coupe (2) pour couper des plantes à récolter au moyen de la machine de récolte (1),
- au moins un organe d'amenée (3) pour amener des plantes coupées,
- au moins un organe de battage (5) qui est entraînable en rotation autour d'un axe de rotation (4) et au moyen duquel des fruits peuvent être détachés des plantes coupées de façon que les fruits soient ensuite disponibles en étant détachés des restes de plantes des plantes coupées,
- au moins un tire-paille allongé (7) entraînable en rotation autour d'un axe de rotation (6), ainsi que
- au moins un équipement de séparation (8) pour séparer des fruits détachés des restes de plantes,
au moyen de l'organe d'amenée (3), les plantes coupées pouvant être amenées à l'organe de battage (5)
au moyen du tire-paille (7), un flux de produit provenant de l'organe de battage (5) et contenant aussi bien des fruits en vrac que des restes de plantes étant transmissible à l'équipement de séparation (8) disposé en aval, au moyen du tire-paille (7) au moins une direction d'écoulement principale du flux de produit pouvant être modifiée,
le tire-paille (7) comportant une pluralité de languettes radiales allongées (10) qui s'étendent entre des côtés frontaux opposés (9) du tire-paille (7) et qui s'étendent respectivement radialement vers l'extérieur à partir de l'axe de rotation (6) du tire-paille (7),
le tire-paille (7) étant conçu sous forme ouverte, de façon à pouvoir être traversé radialement par un flux volumique d'air,
**caractérisée en ce qu'**au moins une partie des languettes radiales (10), de préférence toutes les languettes radiales (10), comporte respectivement comportent, vues en coupe transversale, au moins deux portions utiles, à savoir une portion de réflexion extérieure radiale (14) ainsi qu'une portion d'amenée intérieure radiale (15), de préférence la portion de réflexion (14) et la portion d'amenée (15) étant inclinées par rapport à une radiale (16) s'étendant à partir de l'axe de rotation (6) du tire-paille (7),
et **en ce que** la portion d'amenée (15) - vue en coupe transversale de la languette radiale respective (10) - est conçue au moins par endroits sous forme courbée.

2. Machine de récolte (1) selon la revendication 1, **caractérisée en ce qu'**au moins 50 %, de préférence au moins 60 %, plus préférentiellement au moins 70 % d'une enveloppe extérieure (11) du tire-paille (7) sont conçus sous forme ouverte.

3. Machine de récolte (1) selon la revendication 1 ou 2, **caractérisée par** un organe séparateur allongé (26) qui s'étend parallèlement à l'axe de rotation (6) du tire-paille (7) et coopère avec le tire-paille (7) de façon qu'un flux volumique d'air entraîné tangentiellement par les languettes radiales (10) du tire-paille (7) soit séparable au moyen de l'organe séparateur (26).

4. Machine de récolte (1) selon la revendication 3, **caractérisée en ce que** l'organe séparateur (26) s'étend tangentiellement le long d'une surface périphérique des languettes radiales (10) du tire-paille (7), de préférence sur une plage angulaire, mesurée relativement à l'axe de rotation (6) du tire-paille (7), d'au moins 10°, de préférence d'au moins 20°, plus préférentiellement d'au moins 30°.

5. Machine de récolte (1) selon une des revendications 1 à 4, **caractérisée en ce qu'**une enveloppe extérieure (11) du tire-paille (7) est formée par une pluralité de languettes d'enveloppe (12) qui, vues le long de la périphérie du tire-paille (7), sont disposées de préférence de manière équidistante et qui s'étendent entre les côtés frontaux opposés (9) du tire-paille (7), de préférence les languettes d'enveloppe (12) coopérant respectivement avec respectivement une languette radiale (10), une languette radiale respective (10) s'étendant radialement vers l'extérieur - vue relativement au tire-paille (7) - à partir de la languette d'enveloppe associée (12).

6. Machine de récolte (1) selon une des revendications 1 à 5, **caractérisée en ce que** les languettes radiales (10) coopèrent respectivement avec une pluralité d'éléments de renfort (13), les éléments de renfort (13) d'une languette radiale respective (10) étant disposés le long d'un axe longitudinal (14) de celle-ci.

7. Machine de récolte (1) selon une des revendications 1 à 6, **caractérisée en ce qu'**au moins deux languettes radiales (10) voisines dans la direction circonférentielle du tire-paille (7), de préférence toutes les languettes radiales voisines (10), sont couplées entre elles au moyen d'éléments de renfort (13).

8. Machine de récolte (1) selon la revendication 1, **caractérisée en ce que** la portion de réflexion (14) et la portion d'amenée (15) sont séparées l'une de l'autre au moyen d'un déflecteur (17), en particulier au moyen d'un coude.

9. Machine de récolte (1) selon la revendication 8, **caractérisée en ce que** la portion d'amenée (15) - vue en coupe transversale de la languette radiale respective (10) - est conçue au moins par endroits sous forme courbée, et - relativement à une direction de rotation du tire-paille (7) - la courbure est conçue sous forme convexe.

10. Machine de récolte (1) selon une des revendications 8 à 9, **caractérisée en ce que** la portion de réflexion respective (14) au moins d'une partie des languettes radiales (10), de préférence de toutes les languettes radiales (10), est conçue en forme de peigne, de préférence des barrettes disposées à équidistance - vues suivant un axe longitudinal de la languette radiale respective (10) - s'étendant parallèlement les unes aux autres à partir d'une base de la portion de réflexion (14).

11. Procédé d'exploitation d'une machine de récolte (1), en particulier d'une moissonneuse-batteuse automotrice pour récolter des céréales, comprenant les étapes de procédé suivantes :
a) des plantes à récolter au moyen de la machine de récolte (1) sont coupées au moyen d'un tablier de coupe (2).
b) au moyen d'un organe d'amenée (3), les plantes coupées sont amenées en direction d'un organe de battage (5) à partir du tablier de coupe (2).
c) au moyen de l'organe de battage (5), des fruits sont détachés des plantes coupées de façon que les fruits soient ensuite disponibles sans être reliés à des restes de plantes des plantes coupées.
d) au moyen d'un tire-paille (7), un flux de produit provenant de l'organe de battage (5) et contenant aussi bien des restes de plantes que des fruits en vrac est transmis à un équipement de séparation (8), au moins une direction d'écoulement principale du flux de produit étant modifiée au cours de la transmission.
e) au moyen de l'équipement de séparation (8), les fruits en vrac sont séparés des restes de plantes,
**caractérisé par** l'étape de procédé suivante :
f) le tire-paille (7) est traversé radialement par un flux volumique d'air à partir d'une zone tournée vers l'organe d'amenée (3) vers l'équipement de séparation (8).

12. Procédé selon la revendication 11, **caractérisé en ce que**, au moyen du tire-paille (7), un flux volumique d'air est refoulé activement à partir d'une zone tournée vers l'organe d'amenée (3) en direction d'une zone du tire-paille (7) opposée à l'organe d'amenée (3), de préférence le flux volumique d'air étant égal à au moins 1 500 m³/h, de préférence à au moins 1 750 m³/h, plus préférentiellement à au moins 2 000 m³/h.
